# EUROPÄISCHE PATENTSCHRIFT

(11) **EP 2 907 440 B1**
(45) Veröffentlichungstag und Bekanntmachung des Hinweises auf die Patenterteilung: **25.04.2018**
(21) Anmeldenummer: 15000336.6
(22) Anmeldetag: 05.02.2015
(51) Int. Cl.: A47L 9/28, A47L 5/00, A47L 7/00

(54) **Sauger, insbesondere Nasssauger, sowie Einrichtung zur Ableitung von statischer Ladung, insbesondere zum Einsatz bei Saugern**
Suction device, in particular suction device for liquids, and device for discharging static charge, in particular for use in suction devices
Aspirateur, en particulier aspirateur à eau, et dispositif destiné à dévier l'électricité statique, en particulier pour être utilisé dans des aspirateurs

(30) Priorität: 14.02.2014 DE 102014002185
(43) Veröffentlichungstag der Anmeldung: 19.08.2015
(73) Patentinhaber: PROAIR GmbH Gerätebau, 88260 Argenbühl-Eglofs (DE)
(72) Erfinder: Roth, Paul, 88316 Isny (DE)
(74) Vertreter: Kohl, Karl-Heinz

(56) Entgegenhaltungen:
- WO-A1-2009/091076
- KR-A- 20010 054 142
- US-A- 3 711 742

## Beschreibung

Die Erfindung betrifft einen Sauger, insbesondere einen Nasssauger, nach dem Oberbegriff des Anspruches 1 sowie eine Einrichtung zur Ableitung von statischer Ladung bei Saugern nach dem Oberbegriff des Anspruches 14.

Aus der WO 2009/091076 A1 ist ein Sauger bekannt, der mit einem Anschluss für einen Saugschlauch versehen ist. In einem Gehäuse ist eine Saugeinheit mit einem Antriebsmotor untergebracht.

Während des Staubsaugens werden die luftführenden Teile, wie der Saugschlauch, die Saugbürste, der Auffangbehälter für den Staub und dergleichen, statisch aufgeladen. Die Aufladung kann zu unangenehmen Stromschlägen führen. Bei vielen Staubsaugern werden zur Drehzahlregelung Elektroniksteuerungen eingesetzt, die Mikroprozessoren aufweisen. Durch die statische Hochspannung kann es zu Spannungsüberschlägen auf die Mikroprozessoren und damit zu Fehlfunktionen und auch zu Schäden an der Elektroniksteuerung kommen.

Die statische Aufladung bei Geräten der Schutzklasse I wird üblicherweise über das Netzanschlusskabel an der Schutzerdung abgeleitet. Bei den heute üblichen Geräten der Schutzklasse II ist eine Schutzerdung nicht vorhanden. Darum kann die statische Aufladung dann nicht abgeführt werden, wenn das Gerät auf einem isolierenden Boden, wie auf Holz, Teppich, Laminat und dergleichen, eingesetzt wird.

Es ist weiter ein Staubsauger bekannt (US 3 711 742 A), bei dem die Hochspannung am Griff durch Verwendung eines hochohmig leitenden Kunststoffes abgeleitet wird. Die auftretende statische Spannung wird während des Saugvorganges auf diese Weise kontinuierlich abgeleitet.

Der Erfindung liegt die Aufgabe zugrunde, den gattungsgemäßen Sauger sowie die gattungsgemäße Einrichtung so auszubilden, dass auch bei Geräten der Schutzklasse II eine zuverlässige Ableitung der statischen Aufladung gewährleistet ist.

Diese Aufgabe wird beim gattungsgemäßen Sauger erfindungsgemäß mit den kennzeichnenden Merkmalen des Anspruches 1 und bei der gattungsgemäßen Einrichtung erfindungsgemäß mit den kennzeichnenden Merkmalen des Anspruches 14 gelöst.

Der erfindungsgemäße Sauger ist mit der Kondensatorgruppe versehen, die wenigstens einen Kondensator aufweist. Er ist an eine Leitung zur Einleitung der statischen Spannung angeschlossen und gibt bei Überschreiten einer bestimmten Ladungsmenge die Spannung an das elektrische Stromnetz ab. Die auf dem elektrisch nicht leitenden Teil des Saugers sich bildende statische Ladung wird über das Kontaktelement der Kondensatorgruppe zugeführt. Die Verbindung zur Kondensatorgruppe ist so ausgebildet, dass die Bedienperson des Saugers das Kontaktelement sowie die Kondensatorgruppe nicht berühren kann. Der Sauger selbst erfüllt die Anforderungen nach Schutzklasse II, wobei die Einrichtung zur Ableitung der statischen Spannung sicherstellt, dass es nicht zu Spannungsüberschlägen kommt, so dass die empflindliche Elektronik in den Saugern optimal vor solchen Spannungsüberschlägen geschützt ist.

Das Kontaktelement ist bei einem Nasssauger bevorzugt die Motorwelle des Antriebsmotors. Bei einem Nasssauger erfolgt die Trennung des aufgesaugten Schmutzes von der Luft im Wasser. Beim Saugen wird dieses Wasser aufgewirbelt, so dass ständig Wasser mit der Motorwelle in Berührung kommt. Dadurch kann über die Motorwelle die sich bildende statische Ladung, die sich beispielsweise am Saugschlauch gebildet hat, über die Motorwelle zur Kondensatorgruppe abgeleitet werden.

Bei einer bevorzugten Ausführungsform hat die Kondensatorgruppe zwei in Reihe zur Motorwelle geschaltete Kondensatoren, die an eine Phasenleitung und an eine Nullleitung angeschlossen sind. Über den Mittelanschluss erfolgt die elektrische Verbindung zur Kondensatorgruppe. Abhängig von der Phasenladung erfolgt die Ableitung entweder über die Phasenleitung oder über die Nullleitung.

Die Kondensatoren sind vorteilhaft X- und/oder Y-Kondensatoren, die eine optimale Sicherheit gegen Spannungsüberschläge bieten.

Bei einer vorteilhaften und sicheren Ausbildung weist die Kondensatorgruppe wenigstens zwei Teilgruppen auf. Sie haben jeweils zwei parallel geschaltete Kondensatoren. Die eine Teilgruppe ist an die Phasenleitung und die andere Teilgruppe an die Nullleitung angeschlossen.

Bei einer bevorzugten Ausführungsform sitzt in der die elektrische Ladung zuführenden Leitung eine Gasentladungslampe. Sobald eine statische Spannung höher als die Zündspannung dieser Gasentladungslampe auftritt, zündet die Gasentladungslampe und leitet die anstehende Hochspannung an die Kondensatorbaugruppe weiter. Zudem hat die Verwendung der Gasentladungslampe den Vorteil, dass der Benutzer des Saugers optisch erkennen kann, wenn eine hohe statische Ladung auftritt.

Zur Erhöhung der Betriebssicherheit sitzt zwischen der Gasentladungslampe und der Kondensatorgruppe in der Leitung wenigstens ein Widerstand.

Bevorzugt ist die Gasentladungslampe eine Glimmlampe.

Bei einer weiteren bevorzugten Ausführungsform ist der Kondensatorgruppe wenigstens ein Widerstand vorgeschaltet. Der Widerstand ist hochohmig und sorgt dafür, dass mit Sicherheit eine sichere Ableitung der statischen Hochspannung erfolgt. Um die Sicherheit zu erhöhen, sind vorteilhaft zwei in Reihe liegende Widerstände der Kondensatorgruppe vorgeschaltet.

Vorteilhaft ist die Leitung, die an den Mittenanschluss der Kondensatorgruppe angeschlossen ist, mit der Motorwelle elektrisch leitend verbunden. Die Ableitung der statischen Hochspannung erfolgt somit über die Motorwelle des Saugers. Die Leitung ist hierbei an das obere Ende der Motorwelle mittels wenigstens eines Federteiles federnd angedrückt. Dadurch ist ein sicherer Kontakt zwischen der Motorwelle und der Leitung sichergestellt.

Der Federteil liegt vorteilhaft an einer Kontaktkugel an, die elektrisch leitend mit der Motorwelle verbunden ist. Die Kontaktkugel gewährleistet infolge ihres etwa punktförmigen Kontaktes mit dem Federteil, dass der Federteil auch bei der in der Regel mit hoher Drehzahl rotierenden Motorwelle nur einem geringen Verschleiß unterliegt.

Die Kontaktkugel ist vorteilhaft in einer Vertiefung in der oberen Stirnseite der Motorwelle untergebracht. Dabei ragt die Kontaktkugel aus der Vertiefung heraus, um die Kontaktierung mit dem Federteil sicherzustellen.

Bei einer anderen vorteilhaften Ausbildung liegt der Federteil an einem Kontaktbolzen federnd an, der axial über die Motorwelle ragt und elektrisch leitend mit ihr verbunden ist. Der Kontaktbolzen ist wie die Kontaktkugel ein kostengünstiges Bauteil, das zudem einfach an der Motorwelle vorgesehen werden kann.

Bei einer weiteren vorteilhaften Ausbildung ist der Federteil mit einem Federdraht versehen, der mit seinem freien Ende unter Federkraft in eine Zentrierbohrung in der Stirnseite der Motorwelle eingreift. Auch dadurch ergibt sich ein sicherer Kontakt zwischen dem Federteil und der Motorwelle.

Falls der Federdraht beispielsweise beim Anlaufen des Motors durch die Motorwelle mitgenommen wird, ist der Federdraht vorteilhaft mit einem die Motorwelle mit Abstand umgebenden Wendelabschnitt verbunden. Er sorgt in diesem Falle dafür, dass auf den Federdraht eine hohe Rückstellkraft wirkt, so dass die Hemmung zwischen dem Federdraht und der Motorwelle aufgehoben wird. Dann dreht die Motorwelle relativ zum Federdraht, der zuverlässig die auftretende statische Spannung von der Motorwelle abnimmt und in Richtung auf die Kondensatorgruppe weiterleitet.

Bei einer anderen vorteilhaften Ausbildung ist das obere Ende der Motorwelle ballig ausgebildet. In diesem Falle ist kein gesonderter Kontaktteil erforderlich, der an der Motorwelle zu befestigen wäre.

Das Kontaktelement kann in vorteilhafter Ausbildung ein Kontaktblech oder auch ein Kontaktband sein. Das Kontaktblech und das Kontaktband werden an dem elektrisch nicht leitenden Teil des Saugers befestigt. Das Kontaktblech oder das Kontaktband leiten dann die statische Spannung an die Kondensatorgruppe weiter. Eine solche Ausbildung ist bei Staubsaugern hervorragend einsetzbar, bei denen die Staubabscheidung nicht mit Flüssigkeit, sondern mit Hilfe von Staubfilterbeuteln erfolgt. Das Kontaktblech bzw. das Kontaktband können aber auch bei einem Nasssauger eingesetzt werden. Besonders vorteilhaft ist es, wenn das Kontaktblech bzw. das Kontaktband in diesem Falle zusätzlich zur Ableitung der statischen Ladung über die Motorwelle vorgesehen ist.

Die erfindungsgemäße Einrichtung zeichnet sich dadurch aus, dass sie trotz einer einfachen Gestaltung eine sichere Ableitung von statischen Spannungen, insbesondere von statischen Hochspannungen, gewährleistet. Der Kondensator der Kondensatorbaugruppe leitet die statische Hochspannung, sobald eine bestimmte Ladungsmenge erreicht ist, an das Stromnetz weiter.

Vorteilhaft ist die Kondensatorbaugruppe mit zwei Kondensatoren versehen, die an eine Phasenleitung und an eine Nullleitung angeschlossen sind. Abhängig von der Phasenladung erfolgt die Ableitung in das Stromnetz entweder über den Phasen- oder über den Nullleiter.

Bei einer anderen vorteilhaften Ausführungsform weist die Kondensatorgruppe wenigstens zwei Teilgruppen auf, die jeweils mit zwei parallel geschalteten Kondensatoren versehen sind. Die eine Teilgruppe ist an die Phasenleitung und die andere Teilgruppe an die Nullleitung anschließbar. Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in schematischer Darstellung einen erfindungsgemäßen Sauger,
- Fig. 2: einen Schnitt durch einen Motor des Saugers gemäß Fig. 1,
- Fig. 3: in einer Darstellung entsprechend Fig. 2 eine zweite Ausführungsform eines Motors des erfindungsgemäßen Saugers,
- Fig. 4 bis Fig. 6: verschiedene Ausführungsformen des Anschlusses einer Ableitungsleitung an eine Motorwelle des erfindungsgemäßen Saugers,
- Fig. 7: in schematischer Darstellung eine weitere Ausführungsform einer Ableitung von statischer Ladung im erfindungsgemäßen Sauger,
- Fig. 8: eine weitere Ausführungsform einer Ableitungsschaltung.

Der Sauger ist ein Gerät der Schutzklasse II ohne Schutzleiteranschluss und vorteilhaft ein Nasssauger und hat einen Aufnahmebehälter 1 für eine Reinigungsflüssigkeit, die vorzugsweise Wasser ist. Der Aufnahmebehälter 1 befindet sich auf einem Fahrgestell 2, mit dem der Sauger verfahren werden kann. Auf den Aufnahmebehälter 1 ist ein Motorgehäuse 3 aufgesetzt, das lösbar mit dem Aufnahmebehälter 1 verbunden ist. Im Motorgehäuse 3 befindet sich ein Elektromotor 4, mit dem eine Motorwelle 5 drehbar angetrieben wird. Der Separator 6 hat eine konisch in Richtung auf sein unteres Ende verlaufende Wand 7, in der sich in Höhenrichtung verlaufende Schlitze 8 befinden, durch welche die angesaugte Luft nach innen strömt.

Der Nasssauger hat einen Anschluss 9 für einen Saugschlauch 10, über den die zu reinigende Luft mit den Schmutzteilchen angesaugt wird. Sie gelangt in die im Aufnahmebehälter 1 befindliche Flüssigkeit, in der die groben Schmutzteilchen zurückgehalten werden. Durch den mit hoher Drehzahl rotierenden Separator 6 wird die Luft mit den darin noch enthaltenen Schmutzteilchen angesaugt. An den die Schlitze 8 voneinander trennenden Lamellen 11 des schnell rotierenden Separators 6 prallen die Schmutzteilchen ab und fallen in die Flüssigkeit zurück, während die gereinigte Saugluft durch den Motor strömt und in bekannter Weise aus dem Motorgehäuse 3 austritt.

Die Motorwelle 5 ist in einem elektrisch isolierenden Tragrohr 12 drehbar gelagert. Die Motorwelle 5 ist Bestandteil eines Rotors 13, der mit Permanentmagneten versehen und von einem Stator 14 umgeben ist.

Die Motorwelle 5 ragt nach unten über den Stator 14 und den Rotor 13 und trägt den Separator 6, der vorteilhaft auf das untere Motorwellenende aufgesteckt und lösbar mit ihm verbunden ist. Das obere und das untere Ende der Motorwelle 5 liegen frei.

Beim Staubsaugen werden die luftführenden, aus elektrisch nicht leitendem Material, insbesondere aus Kunststoff, bestehenden Teile, wie der Saugschlauch 10 oder die Saugbürste, statisch aufgeladen. Da bei einem Nasssauger das Wasser, mit dem die Staubabscheidung durchgeführt wird, einen guten elektrischen Leiter bildet, kann die statische Ladung über eine geeignete Vorrichtung gut abgeführt werden. Der Separator 6, der sich mit Abstand oberhalb des Wassers im Aufnahmebehälter 1 befindet, wird mit hoher Drehzahl um seine Achse gedreht. Dadurch wird das Wasser stark aufgewirbelt, wodurch ständig Wasser an das untere, frei liegende Ende der Motorwelle 5 gelangt. Sie ist elektrisch leitend mit einer Kondensatorgruppe 16 verbunden, welche die beim Betrieb des Nasssaugers auftretende, über das Spritzwasser und die Motorwelle 5 zugeführte statische Aufladung zuverlässig abführt. An das obere Ende der Motorwelle 5 ist eine Leitung 17 angeschlossen, in der eine Gasentladungslampe 18 und ein nachgeschalteter Vorwiderstand 19 sitzen. Zwischen dem Vorwiderstand 19 und der Kondensatorgruppe 16 ist an die Leitung 17 ein Kontaktblech 20 angeschlossen, das mit einem elektrisch nicht leitenden Saugerteil verbunden ist.

Die Kondensatorgruppe 16 hat zwei parallel zur Motorwelle 5 geschaltete x- und/oder y-Kondensatoren 21, 22, von denen der Kondensator 21 im Phasenleiter L und der Kondensator 22 in der Neutral- bzw. Nullleitung N liegt. Über einen Mittenanschluss 23 erfolgt die Verbindung zur Leitung 17 bzw. die Einleitung der statischen Hochspannung.

Als Gasentladungslampe 18 wird vorteilhaft eine Glimmlampe verwendet. Sie hat im Ausführungsbeispiel eine Zündspannung von etwa 60 Volt. Im spannungslosen Zustand ist der Elektromotor 4 von der Kondensatorbaugruppe 16 getrennt, über die die statische Ladung in das Leitungsnetz abgeleitet wird.

Führt die statische Aufladung der luftführenden Teile zu einer statischen Spannung, die größer als die Zündspannung der Gasentladungslampe 18 ist, zündet diese Gasentladungslampe und leitet die anstehende Hochspannung an die Kondensatorgruppe 16 weiter. Über sie erfolgt die Ableitung in das elektrische Netz.

Die Verwendung der Gasentladungslampe 18 hat den Vorteil, dass der Benutzer des Saugers am Aufleuchten der Gasentladungslampe 18 erkennen kann, dass die statische Hochspannung gerade aus dem Gerät abgeleitet wird.

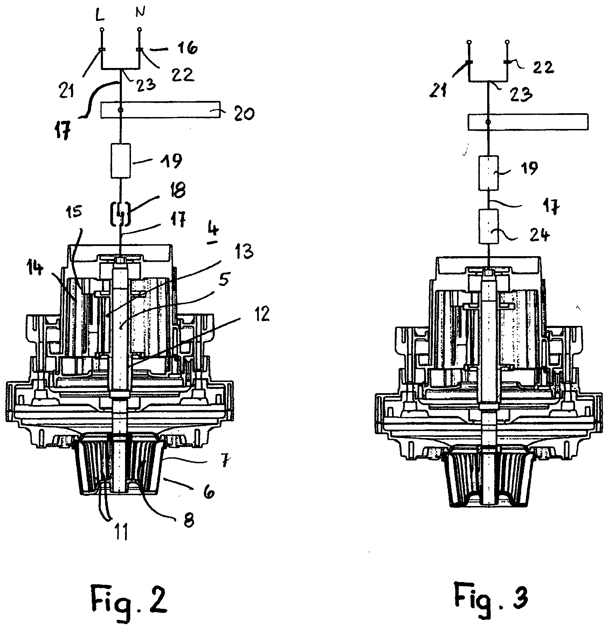

Fig. 3 zeigt eine andere Ausführungsform der Ableitung der statischen Hochspannung. Anstelle der Gasentladungslampe 18 sitzt in der Leitung 17 ein weiterer Vorwiderstand 24. Im Übrigen ist die Ableitungsschaltung gleich ausgebildet wie bei der vorigen Ausführungsform. Die beiden Vorwiderstände 19, 24 liegen in Reihe und bilden einen hochohmigen Widerstand, über den die statische Hochspannung auf den Mittenanschluss 23 der Kondensatoren 21, 22 abgeleitet wird. Die Verwendung zweier in Reihe geschalteter Vorwiderstände 19, 24 erhöht die Sicherheit, falls einer der Widerstände beschädigt oder gar zerstört werden sollte. Zur Ableitung der statischen Hochspannung reicht ein hochohmiger Widerstand 19 bzw. 24 aus. Er muss dann jedoch aus sicherheitstechnischen Gründen so ausgebildet sein, dass er bei Zerstörung nicht niederohmig werden kann.

Die Kondensatoren 21, 22, die in Reihe zur Motorwelle 5 geschaltet sind, speichern zunächst die statische Spannung. Sobald eine durch die Kondensatoren 21, 22 vorgegebene Ladungsmenge erreicht ist, erfolgt eine Spannungsableitung in das Stromnetz. Der Mittenanschluss 23 ist mit den statisch aufgeladenen Teilen des Saugers so verbunden, dass die Bedienperson des Saugers die elektrischen Anschlussteile nicht berühren kann. Die Ableitungsschaltung ist in den Fig. 2 und 3 lediglich der Übersichtlichkeit wegen außerhalb des Motors dargestellt. In der Praxis befindet sie sich innerhalb des Motorgehäuses 3. Sobald die dem Mittenanschluss 23 zugeführte statische Hochspannung über die Spannung dieses Mittenanschlusses ansteigt, erfolgt, abhängig von der Phasenladung, eine Ableitung in das elektrische Netz entweder über den Kondensator 21 bzw. die Phase L oder über den Kondensator 22 bzw. über den Nullleiter N.

Das Kontaktblech 20 leitet die statische Ladung zusätzlich von den elektrisch nicht leitenden Saugerteilen über die Zuleitung 17 an den Mittenanschluss 23 der Kondensatorgruppe 16 ab.

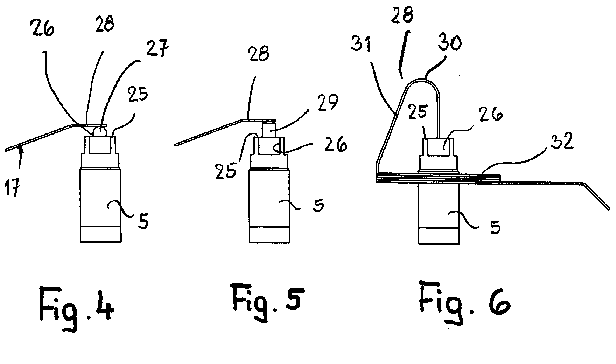

Die Fig. 4 bis 6 zeigen mögliche Anbindungen der Leitung 17 an die Motorwelle 5. Da sie beim Betrieb des Saugers um ihre Achse dreht, ist die Anbindung der Leitung 17 so ausgebildet, dass trotz Drehung der Motorwelle 5 ein sicherer und verschleissarmer Kontakt mit der Leitung 17 sichergestellt ist.

Beim Ausführungsbeispiel nach Fig. 4 ist in der Stirnseite 25 der Motorwelle 5 eine Vertiefung 26 vorgesehen, die eine Kontaktkugel 27 aufnimmt. Sie besteht aus elektrisch leitendem Material. Auf ihr liegt ein Federteil 28 unter Druck auf. Es ist vorteilhaft ein Federblech, das unter elastischer Vorspannung an der Kontaktkugel 27 aufliegt und an die Leitung 17 angeschlossen, beispielsweise angelötet ist. Die Kontaktkugel 27 gewährleistet infolge ihrer Kugelform, dass zwischen dem Federteil 28 und der Kontaktkugel annähernd nur Punktberührung besteht, wodurch die Reibung klein gehalten werden kann. Infolge der federnden Ausbildung des Federteiles 28 wird außerdem sichergestellt, dass auch nach längerem Einsatz des Saugers ein zuverlässiger Kontakt zwischen dem Federteil 28 und der Kontaktkugel 27 sichergestellt ist.

Bei der Ausführungsform gemäß Fig. 5 ist der Federteil 28 mit einem in die Vertiefung 26 am oberen Ende der Motorwelle 5 befestigten Kontaktbolzen 29 in elektrisch leitendem Kontakt. Der Kontaktbolzen 29 ragt axial über die obere Stirnseite 25 der Motorwelle 5. Der Federteil 28 liegt unter elastischer Vorspannung auf der Stirnseite des Kontaktbolzens 29 auf. Um die Kontaktreibung so klein wie möglich zu halten, hat der Kontaktbolzen 29 nur einen kleinen Durchmesser, der vorteilhaft kleiner ist als der Durchmesser der Vertiefung 26.

Bei der Ausführungsform nach Fig. 6 ragt in die Vertiefung 26 der Motorwelle 5 ein vorgespannter Federdraht 30 des Federteiles 28. Der Federdraht 30 ragt mit seinem Ende in eine im Boden der Vertiefung 26 vorgesehene Zentrierbohrung, wobei durch die elastische Vorspannung sichergestellt ist, dass der Federdraht 30 bei rotierender Motorwelle 5 nicht außer Kontakt mit der Motorwelle 5 kommt. Der Federdraht 30 ragt zunächst axial über die obere Stirnseite 25 der Motorwelle und geht mit Abstand von der Stirnseite 25 bogenförmig in einen Zwischenabschnitt 31 über, der den Federdraht 30 mit einem gewendelten Abschnitt 32 verbindet. Er umgibt die Motorwelle 5 mit radialem Abstand. Der gewendelte Abschnitt 32 stellt sicher, dass der elektrisch leitende Kontakt zwischen dem Federdraht 30 und der Motorwelle 5 auch dann sichergestellt ist, wenn der Federdraht 30 beispielsweise beim Anlaufen der Motorwelle 5 kurzzeitig an der Motorwelle hängenbleiben sollte. In einem solche Falle wird der gewendelte Abschnitt 32 so elastisch verformt, dass eine entgegen der Drehrichtung der Motorwelle 5 wirkende Kraft auf den Federdraht 30 wirkt, die so groß ist, dass sich der Federdraht 30 wieder freimacht.

Die Leitung 17 wird wie bei den vorigen Ausführungsbeispielen in geeigneter Weise elektrisch leitend mit dem Federdraht 30 verbunden.

Die Motorwelle 5 muss nicht eine stirnseitige Vertiefung aufweisen. Die Kontaktkugel 27, der Kontaktbolzen 29 und die Zentrierbohrung können auch an der ebenen Stirnseite 25 der Motorwelle 5 vorgesehen sein.

Bei einer weiteren (nicht dargestellten) Ausführungsform ist das obere Ende der Motorwelle 5 ballig ausgebildet. In diesem Falle ist kein zusätzliches Kontaktteil erforderlich, das mit der Motorwelle 5 verbunden werden muss. Auf dem balligen Ende der Motorwelle liegt der Federteil 28 nahezu punktförmig auf, so dass nur eine geringe Reibung beim Betrieb des Saugers auftritt.

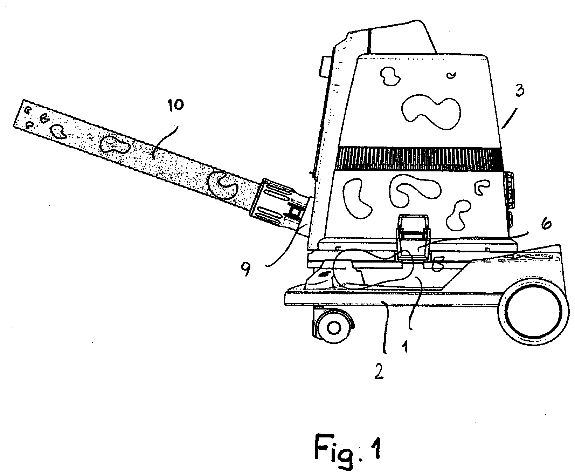

Während bei dem beschriebenen Ausführungsbeispiel eines Nasssaugers die statische Ableitung über die Motorwelle 5 der Kondensatorgruppe 16 zugeführt wird, wird bei einem mit Staubfilterbeutel arbeitenden Sauger zur Ableitung der statischen Ladung an die Kondensatorgruppe 16 das Kontaktblech 20 eingesetzt. Es ist an einem elektrisch nicht leitenden Teil des Saugers, beispielsweise dem aus Kunststoff bestehenden Motorgehäuse, befestigt und über die Leitung 17 in der beschriebenen Weise an den Mittenanschluss 23 der Kondensatorgruppe 16 angeschlossen. Die Ableitung der statischen Ladung erfolgt in gleicher Weise, wie anhand der Fig. 1 bis 6 erläutert worden ist.

Die Verwendung des Kontaktbleches 20 beim Nasssauger gemäß dem dargestellten Ausführungsbeispiel hat den Vorteil, dass die statische Ladung nicht nur über die Motorwelle 5, sondern auch über das Kontaktblech 20 an die Kondensatorgruppe 16 abgeleitet werden kann. Dadurch ist eine erhöhte Sicherheit gegeben.

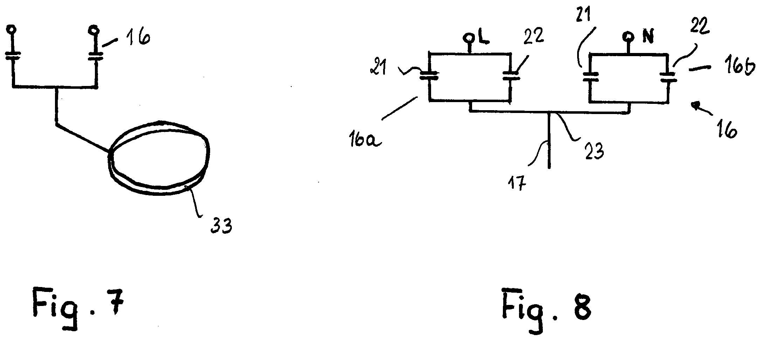

Fig. 7 zeigt ein weiteres Ausführungsbeispiel, wie eine statische Ladung an die Kondensatorgruppe 16 abgeleitet werden kann. Hierfür ist ein Kontaktkörper 33 in Form eines Drahtes, eines Metallstreifens oder einer Metallfolie vorgesehen, die am elektrisch nicht leitenden Teil des Saugers in geeigneter Weise befestigt werden kann. Der Kontaktkörper 33 ist als umlaufender Ring dargestellt. Er kann aber auch die Form eines Teilringes haben oder jede andere geeignete Form. Der Kontaktkörper leitet die am Saugerteil gebildete statische Ladung an die Kondensatorgruppe 16 weiter. Die Ableitung in das Stromnetz erfolgt in der beschriebenen Weise. Der Kontaktkörper 33 ist vorteilhaft bei einem Staubsauger einsetzbar, bei dem die Schmutzteilchen aus der angesaugten Luft mittels eines Staubfilterbeutels abgeschieden werden. Er kann aber auch beim dargestellten beschriebenen Nasssauger zusätzlich vorgesehen sein, um die Sicherheit bei der Ableitung der statischen Ladung zu erhöhen. In diesem Falle wird, wie bei der Ausführungsform gemäß den Fig. 1 bis 6, die statische Ladung über die Motorwelle 5 und den Kontaktkörper 33 zur Kondensatorgruppe 16 geleitet.

Fig.8 zeigt ein weiteres Ausführungsbeispiel der Kondensatorgruppe 16. Sie hat zwei Teilgruppen 16a, 16b, die jeweils mit den Kondensatoren 21, 22 versehen sind. Die Teilgruppe 16a ist an die Phasenleitung L und die Teilgruppe 16b an den Nullleiter N angeschlossen. In den beiden Teilgruppen 16a, 16b sind die Kondensatoren 21, 22 parallel geschaltet. Die elektrische Hochspannung wird auch bei dieser Schaltung von der Leitung 17 über den Mittenanschluss 23 an die Kondensatorgruppe 16 abgeführt.

## Patentansprüche

1. Sauger, insbesondere Nasssauger, der Schutzklasse II, mit einem Anschluss (9) für einen Saugschlauch (10), mit einem Antriebsmotor (4) und mit wenigstens einem elektrisch nicht leitenden Teil (3, 10), **dadurch gekennzeichnet, dass** das elektrisch nicht leitende Teil (3,10) zur Ableitung von statischer Spannung über wenigstens ein Kontaktelement (5, 20, 33) mit einer Einrichtung elektrisch leitend verbunden ist, die eine Kondensatorgruppe (16) mit wenigstens einem Kondensator (21, 22) aufweist, der an eine Leitung (17) zur Einleitung der statischen Spannung angeschlossen ist und bei Überschreiten einer bestimmten Ladungsmenge die Spannung an das elektrische Stromnetz abgibt.

2. Sauger nach Anspruch 1,
**dadurch gekennzeichnet, dass** das Kontaktelement (5) eine Motorwelle des Antriebmotors (4) ist.

3. Sauger nach Anspruch 1 oder 2,
**dadurch gekennzeichnet, dass** die Kondensatorgruppe (16) zwei in Reihe zur Motorwelle (5) geschaltete Kondensatoren (21, 22) aufweist, die an eine Phasenleitung (L) und an eine Nullleitung (N) angeschlossen sind, und dass an einen Mittenanschluss (23) der Kondensatorgruppe (16) die Leitung (17) zur Einleitung der statischen Spannung angeschlossen ist.

4. Sauger nach einem der Ansprüche 1 bis 3,
**dadurch gekennzeichnet, dass** die Kondensatoren (21, 22) X- und/oder Y-Kondensatoren sind.

5. Sauger nach einem der Ansprüche 1 bis 4,
**dadurch gekennzeichnet, dass** die Kondensatorgruppe (16) wenigstens zwei Teilgruppen (16a, 16b) aufweist, die jeweils zwei parallel geschaltete Kondensatoren (21, 22) aufweisen, von denen die eine Teilgruppe (16a) an die Phasenleitung (L) und die andere Teilgruppe (16b) an die Nullleitung (N) angeschlossen sind.

6. Sauger nach einem der Ansprüche 3 bis 5,
**dadurch gekennzeichnet, dass** in der Leitung (17) eine Gasentladungslampe (18), vorteilhaft eine Glimmlampe, und vorzugsweise wenigstens ein zwischen der Gasentladungslampe (18) und der Kondensatorgruppe (16) angeordneter Widerstand (19) liegen.

7. Sauger nach einem der Ansprüche 1 bis 6,
**dadurch gekennzeichnet, dass** der Kondensatorgruppe (16) wenigstens ein Widerstand (19, 24), vorzugsweise zwei in Reihe liegende Widerstände vorgeschaltet sind.

8. Sauger nach einem der Ansprüche 2 bis 7,
**dadurch gekennzeichnet, dass** die Leitung (17) an das obere, vorzugsweise ballig ausgebildete Ende der Motorwelle (5) mit einem Federteil (28) federnd angedrückt ist.

9. Sauger nach Anspruch 8,
**dadurch gekennzeichnet, dass** der Federteil (28) an einer vorteilhaft aus einer Vertiefung (26) in der oberen Stirnseite (25) der Motorwelle (5) ragenden Kontaktkugel (27) anliegt, die elektrisch leitend mit der Motorwelle (5) verbunden ist.

10. Sauger nach Anspruch 8,
**dadurch gekennzeichnet, dass** der Federteil (28) an einem vorteilhaft am Boden der Vertiefung (26) der Motorwelle (5) befestigten Kontaktbolzen (29) federnd anliegt, der axial über die Motorwelle (5) ragt und elektrisch leitend mit ihr verbunden ist.

11. Sauger nach Anspruch 8,
**dadurch gekennzeichnet, dass** der Federteil (28) einen Federdraht (30) aufweist, der mit seinem freien Ende unter Federkraft in eine Zentrierbohrung in der Stirnseite (25) der Motorwelle (5) eingreift.

12. Sauger nach Anspruch 11,
**dadurch gekennzeichnet, dass** der Federdraht (30) mit einem die Motorwelle (5) mit Abstand umgebenden Wendelabschnitt (32) verbunden, vorzugsweise einstückig mit ihm ausgebildet ist.

13. Sauger nach einem der Ansprüche 1 bis 12,
**dadurch gekennzeichnet, dass** das Kontaktelement (20, 33) ein Kontaktblech oder ein Kontaktband ist.

14. Einrichtung zur Ableitung von statischer Ladung bei Saugern, vorzugsweise bei Nasssaugern, nach einem der Ansprüche 1 bis 13,
**dadurch gekennzeichnet, dass** die Einrichtung eine Kondensatorgruppe (16) mit wenigstens einem Kondensator (21, 22) aufweist, und dass die Kondensatorgruppe (16) einen Anschluss (23) zur Einleitung der statischen Spannung und einen Anschluss (L, N) zur Ableitung der gespeicherten Ladung an das Stromnetz aufweist.

15. Einrichtung nach Anspruch 14,
**dadurch gekennzeichnet, dass** die Kondensatorgruppe (16) zwei Kondensatoren (21, 22) aufweist, die an eine Phasenleitung (L) und an eine Nullleitung (N) angeschlossen sind, und dass die Kondensatorgruppe (16) einen Mittenanschluss (23) für eine Leitung (17) zur Einleitung der statischen Spannung aufweist.

16. Einrichtung nach Anspruch 14 oder 15,
**dadurch gekennzeichnet**, das die Kondensatorgruppe (16) wenigstens zwei Teilgruppen (16a, 16b) aufweist, die jeweils zwei parallel geschaltete Kondensatoren (21, 22) aufweisen, von denen die eine Teilgruppe (16a) an die Phasenleitung (L) und die andere Teilgruppe (16b) an die Nullleitung (N) anschließbar sind.

## Claims

1. Suction device, in particular suction device for liquids, of Protection-Class II, with a connection (9) for a vacuum hose (10), with a drive motor (4) and with at least one electrically non-conductive part (3, 10),
**characterized in that** the electrically non-conductive part (3, 10) for discharging of static voltage is connected to a device via at least a contact element (5, 20, 33) in an electrically conductive manner, which has a capacitor group (16) with at least one capacitor (21, 22), which is connected to a line (17) for discharging of static voltage and emits the voltage into the electrical power network when it exceeds a certain electrical-charge level.

2. Suction device according to Claim 1,
**characterized in that** the contact element (5) is a motor shaft of the drive motor (4).

3. Suction device according to Claim 1 or 2,
**characterized in that** the capacitor group (16) has two capacitors (21, 22) connected in series to the motor shaft (5), which are connected to a phase line (L) and to a neutral line (N) and that the line (17) to discharge static voltage is connected to a centre connection (23) of the capacitor group (16).

4. Suction device according to one of the Claims 1 to 3,
**characterized in that** the capacitors (21, 22) are X- and/or Y-capacitors.

5. Suction device according to one of the Claims 1 to 4,
**characterized in that** the capacitor group (16) has at least two subgroups (16a, 16b), which each have two capacitors (21, 22) connected in parallels, of which the one subgroup (16a) is connected to the phase line (L) and the other subgroup (16b) is connected to the neutral line (N).

6. Suction device according to one of the Claims 3 to 5,
**characterized in that** a gas-discharge lamp (18), preferably a glow lamp, and preferably at least one resistor (19) arranged between the gas-discharge lamp (18) and the capacitor group (16) are in the line (17) .

7. Suction device according to one of the Claims 1 to 6,
**characterized in that** at least one resistor (19, 24), preferably two resistors situated in a line, are loaded upstream to the capacitor group (16).

8. Suction device according to one of the Claims 2 to 7,
**characterized in that** the line (17) is resiliently pressed against the preferably spherical-shaped upper end of the motor shaft (5) by a spring element (28).

9. Suction device according Claim 8,
**characterized in that** the spring element (28) rests against a contact ball (27) preferably protruding out of a recess (26) on the upper front side (25) of the motor shaft (5), and which is connected to the motor shaft (5) in an electrically conductive manner.

10. Suction device according Claim 8,
**characterized in that** the spring element (28) resiliently rests against a contact bolt (29) preferably connected to the floor of the recess (26) of the motor shaft (5), protrudes axially over the motor shaft (5) and is connected to it in an electrically conductive manner.

11. Suction device according to Claim 8,
**characterized in that** the spring element (28) has a spring wire (30), which resiliently engages into a centering bore hole on the front side (25) of the motor shaft (5) with its free end.

12. Suction device according Claim 11,
**characterized in that** the spring wire (30) is connected to a spiral-coil section (32) surrounding the motor shaft (5) at a distance, preferably being one piece with said spiral-coil section.

13. Suction device according to one of the Claims 1 to 12,
**characterized in that** the contact element (20, 33) is a contact sheet or a contact strip.

14. Device for discharging static charge for use in suction devices, preferably for suction devices for liquids, according to one of the Claims 1 to 13,
**characterized in that** the device has a capacitor group (16) with at least one capacitor (21, 22), and that the capacitor group (16) has a connection (23) to feed in the static voltage and one connection (L, N) to discharge a stored charge to the electrical power network.

15. Device according to Claim 14,
**characterized in that** the capacitor group (16) has two capacitors (21, 22), which are connected to a phase line (L) and a neutral line (N) and that the capacitor group (16) has a centre connection (23) for a line (17) for discharging static voltage.

16. Device according to Claim 14 or 15,
**characterized in that** the capacitor group (16) has at least two subgroups (16a, 16b), which each have two capacitors (21, 22) connected in parallel, of which the one subgroup (16a) can be connected to the phase line (L) and the other subgroup (16b) is connectable to the neutral line (N).

## Revendications

1. Aspirateur, en particulier aspirateur á eau, de la classe de protection II, doté d'un raccord (9) pour un flexible d'aspiration (10), doté d'un moteur d'entraînement (4) et d'au moins une pièce (3, 10) non conductrice d'électricité,
**caractérisé en ce que** pour la dérivation de tension statique, la pièce (3, 10) non conductrice d'électricité est connectée de manière à conduire l'électricité par l'intermédiaire d'au moins un élément de contact (5, 20, 33) avec un dispositif qui comporte un groupe de condensateurs (16) avec au moins un condensateur (21, 22) qui est raccordé sur une ligne (17) destinée à l'introduction de la tension statique et qui lors du dépassement d'une quantité de charge définie, restitue la tension au réseau de courant électrique.

2. Aspirateur selon la revendication 1,
**caractérisé en ce que** l'élément de contact (5) est un arbre moteur du moteur d'entraînement (4).

3. Aspirateur selon la revendication 1 ou 2,
**caractérisé en ce que** le groupe de condensateurs (16) comporte deux condensateurs (21, 22) montés en série par rapport à l'arbre moteur (5), qui sont raccordés sur une phase (L) et sur un neutre (N), et **en ce que** sur un raccord central (23) du groupe de condensateurs (16) est connectée la ligne (17) destinée à l'introduction de la tension statique.

4. Aspirateur selon l'une quelconque des revendications 1 à 3,
**caractérisé en ce que** les condensateurs (21, 22) sont des condensateurs X et/ou Y.

5. Aspirateur selon l'une quelconque des revendications 1 à 4,
**caractérisé en ce que** le groupe de condensateurs (16) comporte au moins deux groupes partiels (16a, 16b) qui comportent chacun deux condensateurs (21, 22) montés en parallèle, dont l'un (16a) des groupes partiels est raccordé sur la phase (L) et l'autre groupe partiel (16b) est raccordé sur le neutre (N).

6. Aspirateur selon l'une quelconque des revendications 3 à 5,
**caractérisé en ce que** dans la ligne (17) se situent une lampe à décharge de gaz (18), avantageusement une lampe au néon, et de préférence au moins une résistance (19) placée entre la lampe à décharge de gaz (18) et le groupe de condensateurs (16).

7. Aspirateur selon l'une quelconque des revendications 1 à 6,
**caractérisé en ce qu'**en amont du groupe de condensateurs (16) est montée au moins une résistance (19, 24), de préférence sont montées deux résistances situées en série.

8. Aspirateur selon l'une quelconque des revendications 2 à 7,
**caractérisé en ce que** la ligne (17) est appuyée de manière élastique sur l'extrémité supérieure, conçue de préférence de forme bombée de l'arbre moteur (5) par une pièce à ressort (28).

9. Aspirateur selon la revendication 8,
**caractérisé en ce que** la pièce à ressort (28) est adjacente à une bille de contact (27) saillant avantageusement d'un creux (26) dans la face frontale supérieure (25) de l'arbre moteur (5) qui est connectée de manière à conduire l'électricité sur l'arbre moteur (5).

10. Aspirateur selon la revendication 8,
**caractérisé en ce que** la pièce à ressort (28) est élastiquement adjacente à une broche de contact (29) avantageusement fixée sur le fond inférieur du creux (26) de l'arbre moteur (5), qui saillit en direction axiale par-dessus l'arbre moteur (5) et qui est connectée à ce dernier de manière à conduire l'électricité.

11. Aspirateur selon la revendication 8,
**caractérisé en ce que** la pièce à ressort (28) comporte un fil métallique à ressort (30), qui par son extrémité libre s'engage sous force du ressort dans un alésage de centrage dans la face frontale (25) de l'arbre moteur (5) .

12. Aspirateur selon la revendication 11,
**caractérisé en ce que** le fil métallique à ressort (30) est connecté sur un tronçon de spire (32) entourant l'arbre moteur (5) avec un écart, est conçu de préférence en monobloc avec celui-ci.

13. Aspirateur selon l'une quelconque des revendications 1 à 12,
**caractérisé en ce que** l'élément de contact (20, 33) est une tôle de contact ou un ruban de contact.

14. Dispositif destiné à dévier l'électricité statique pour utilisé dans aspirateurs, en particulier aspirateur á eau, selon l'une quelconque des revendications 1 à 13,
**caractérisé en ce que** le système comporte un groupe de condensateurs (16) avec au moins un condensateur (21, 22), et **en ce que** le groupe de condensateurs (16) comporte un raccord (23) destiné à l'introduction de la tension statique et un raccord (L, N) destiné à la dérivation de la charge accumulée dans le réseau électrique.

15. Système selon la revendication 14,
**caractérisé en ce que** le groupe de condensateurs (16) comporte deux condensateurs (21, 22) qui sont raccordés sur une phase (L) et sur un neutre (N), et **en ce que** le groupe de condensateurs (16) comporte un raccord central (23) pour une ligne (17) destinée à l'introduction de la tension statique.

16. Système selon la revendication 14 ou 15,
**caractérisé en ce que** le groupe de condensateurs (16) comporte au moins deux groupes partiels (16a, 16b) qui comportent chacun au moins deux condensateurs (21, 22) montés en parallèle, dont l'un (16a) des groupes partiels peut se raccorder sur la phase (L) et l'autre groupe partiel (16b) peut se raccorder sur le neutre (N) .
